# EUROPÄISCHE PATENTSCHRIFT

(11) **EP 2 395 686 B1**
(45) Veröffentlichungstag und Bekanntmachung des Hinweises auf die Patenterteilung: **03.08.2016**
(21) Anmeldenummer: 11004503.6
(22) Anmeldetag: 01.06.2011
(51) Int. Cl.: H04B 17/27, H04B 17/318, H04B 17/26

(54) **Verfahren zur Standortbeurteilung für den Betrieb eines Datenfunk-Empfängers zur Verbrauchsdaten-Erfassung**
Location assessment method for operating a wireless data receiver for consumption data tracking
Procédé d'évaluation spatiale pour le fonctionnement d'un récepteur radio de données d'établissement de données de consommation

(30) Priorität: 11.06.2010 DE 102010023448; 24.06.2010 DE 102010024887
(43) Veröffentlichungstag der Anmeldung: 14.12.2011
(73) Patentinhaber: Diehl Metering Systems GmbH, 90451 Nürnberg (DE)
(72) Erfinder: Kauppert, Thomas, 90489 Nürnberg (DE); Gottschalk, Klaus, 90610 Winkelhaid (DE); Uhlmann, Thomas, 91735 Muhr am See (DE)
(74) Vertreter: Diehl Patentabteilung

(56) Entgegenhaltungen:
- WO-A2-02/15417
- US-A1- 2003 228 846
- US-A1- 2006 030 270

## Beschreibung

Die Erfindung betrifft ein Verfahren gemäß dem Oberbegriff des Hauptanspruches.

In beispielsweise der DE 10 2006 003 333 A1 wird die zeitgemäße Funk-Fernablesung von Verbrauchsdaten beschrieben. Danach wird der jeweilige Verbrauch mittels eines an der Verbrauchsstelle installierten Messgerätes - etwa für die Frischwasserentnahme aus einer Steigleitung oder für die Wärmemengenabgabe eines Heizkörpers - erfasst und zusammen mit einer individuellen Verbrauchsstellen-Adresse und einem Zeitstempel über ein drahtloses örtliches Netzwerk (WLAN) per Nahbereichs-Datenfunk an den Empfänger eines stationären oder mobilen Datenspeichers übermittelt. In einem stationären Datenspeicher überschreibt der jeweils aktuell saldierte Verbrauchswert den unter der zugeordneten Adresse bisher abgespeicherten Verbrauchswert. Der Datenspeicher mit seinem Empfänger ist dafür beispielsweise im Kellervorraum einer Wohnanlage installiert. Außerdem verfügt der Datenspeicher über einen Sender, um den aktuellen Datenbestand auf Abfrage im Vorbeigehen oder im Vorbeifahren an einen Abfrage-Datenspeicher für die gesondert offline vorzunehmende Verbrauchsabrechnung zu übermitteln. Es kann aber auch vorgesehen sein, mit dem Empfänger des Abfrage-Datenspeichers die Verbrauchsstellen unmittelbar zu kontaktieren, wenn die saldierten Verbrauchswerte nicht in einem zentralen Datenspeicher etwa einer Wohnalge zwischengespeichert, sondern bei den einzelnen Verbrauchsstellen selbst gespeichert sind.

Problematisch sind generell, und das gerade auch in mehrstöckigen Wohnanlagen, die unsicheren Funkverbindungen von den einzelnen Verbrauchsstellen zum Empfänger des stationären Datenspeichers bzw. des mobilen Abfrage-Datenspeichers, weil in der Praxis häufig die Datenübermittlung etwa durch permanente oder temporäre Störquellen, durch Kollisionen mit anderen Funkübertragungen oder durch antennen- und umgebungsbedingt zu geringe Signalreichweite (Link-Budget) beeinträchtigt ist.

Die WO 02/15417 A2 beschreibt ein Verfahren zur Verarbeitung von Signalstärke-Informationen, die durch einen Funkempfänger an mehreren geografischen Orten (z. B. bei der Fahrt eines Fahrzeugs auf einer Autobahn) erfasst werden. Die dabei ermittelten Werte für die Funksignalstärke werden anhand ihrer Abweichung vom Mittelwert ausgewertet, um so eine Standardabweichung oder alternativ auch eine Varianz zu errechnen. Diese Auswertung erfolgt vollautomatisch und dient als Grundlage für eine weitere Auswertung hinsichtlich der prozentualen Abdeckung einer zurückgelegten Route des fahrenden Fahrzeugs.

In der US 2006/0030270 A1 ist ein mobiles Funkgerät beschrieben, mit welchem es möglich ist, RSSI-Werte von Basisstationen zu empfangen, zusammen mit jeweiligen Wegparametern zu speichern und über ein Anzeigemodul anzuzeigen. Darüber hinaus ist das mobile Funkgerät in der Lage, einen RSSI-Mittelwert und eine RSSI-Standardabweichung zu bilden.

Aus der US 2003/0228846 A1 ist ein Gerät und ein Verfahren zur Bestimmung einer Näherungsdistanz bekannt, wobei die Signalstärke eines empfangenen Funksignals gemessen wird. Zur Bestimmung der Entfernung des Funksenders wird die Varianz der Signalstärke ermittelt. Ein LCD-Anzeigegerät dient als Schnittstelle zum Benutzer.

Die EP 2 192 706 A2 offenbart ein Maschennetz zur Verbrauchsdatenerfassung, bei welchem an jedem Netzknoten RSSI-Daten gemessen und an die Netzzentrale übermittelt werden, um die Funk-Umgebung des Netzwerks zu bewerten. Darüber hinaus können auch statistische Analysen durchgeführt werden und gemittelte RSSI-Daten und RSSI-Autokorrelationsfunktions-Daten oder auch RSSI-Wahrscheinlichkeitsdichtefunktions-Daten an die Netzzentrale übermittelt werden.

Der vorliegenden Erfindung liegt die technische Problemstellung zugrunde, eine einfach durchführbare Betriebsortbeurteilung für zuverlässige Datenübertragung zu einem Datenspeicher zu schaffen und möglichst zugleich eine wenig aufwändige Möglichkeit zur Überprüfung der Qualität der eingerichteten Datenübermittlung zu eröffnen.

Diese Aufgabe ist erfindungsgemäß durch die im Hauptanspruch angegebenen wesentlichen Merkmale gelöst. Danach wird ein Kanal in dem Frequenzbereich, über den die Datenübertragung erfolgen soll (insbesondere im UHF-Spektrum), mit einem Empfänger über jeweils kurze Zeitspannen in diskreten (Zeit. und) Frequenzschritten abgetastet; und die jeweiligen Empfangssignale werden mit Hilfe eines statistischen Verfahrens leistungsbezogen ausgewertet und zu einer Histogramm-Darstellung über eine klassierte Häufigkeitsverteilung der relativen Empfangsfeldstärke (RSSI) umgesetzt, die unmittelbar die Belegung des Kanales und damit dessen Eignung für die vorgesehene Datenübermittlung repräsentiert. Bei brauchbarem solchem Abtastergebnis kann der Datenspeicher an dieser Stelle betrieben werden, andernfalls wird solcher Kanal-Scan nach Vornahme entsprechender Anpassungsmaßnahmen oder durch Abtastung von einem anderen Orte aus wiederholt.

Für den Fall, dass die Auswertung der RSSI-Messwerte mittels des statistischen Verfahrens ergibt, dass Messwerte signifikant oberhalb des Grundrauschens vorliegen, sind als solche Anpassungsmaßnahmen die Verringerung der Empfangsreichweite (z. B. durch Verzicht auf einen Vorverstärker im Empfänger), eine Einschränkung des Empfangsradius (z. B. durch Verwendung einer Empfangsantenne mit Richtcharakteristik) und/oder die Reduzierung der Sendehäufigkeit (z. B. durch kürzere Funktelegramme und/oder längere Intervalle zwischen den Sendezeitpunkten der Funktelegramme) möglich.

Für den Fall, dass die Auswertung der RSSI-Messwerte ergibt, dass eine nennenswerte Empfangshäufigkeit hoher Empfangsfeldstärke vorliegt, sind vorübergehende oder auch Dauer-Störpegel und damit zusammenhängend Link-Budget-Probleme zu erwarten. Als Anpassungsmaßnahmen hiergegen ist die Installation eines Frequenzfilters, der das Störsignal entsprechend stark dämpft, ohne das Nutzsignal nennenswert zu beeinflussen, und/oder die Wahl eines anderen In-stallationsortes (z. B. außerhalb des gerichteten Sendestrahls einer GSM-Richtsendeantenne) anzuraten.

Für solch eine Abfrage der Kanalbelegung kann ein separat mitgeführter Testempfänger eingesetzt werden. Vorzugsweise ist aber der Empfänger des Datenspeichers selbst mit einer manuellen oder externen Möglichkeit zum Initialisieren und Auswerten des Kanal-Scan für die Erstinstallation und gegebenenfalls für sporadische spätere Qualitätsüberprüfungen ausgestattet, mit Ermitteln und Darbieten etwa des Histogrammes auf einem vor Ort angeschlossenen Laptop oder in einer Zentraleinheit für die Betriebsüberwachung im WLAN-Datenerfassungssystem.

Vorteilhaft kann eine spätere Überprüfung auf einen für die Datenübermittlung noch brauchbaren Betriebsort des stationär betriebenen Datenspeichers jederzeit durch Funkauslösung der Kanal-Abtastung für eine Ferndiagnose etwa von der Zentraleinheit aus erfolgen, um im Falle einer Verschlechterung der örtlichen Empfangsgegebenheiten einen Servicemitarbeiter zum Verändern des Installationsortes oder zur Vornahme entsprechender Anpassungsmaßnahmen zu entsenden. Bei Reklamationen aufgrund festgestellter oder möglicher Betriebsstörungen kann so im Wege der Ferndiagnose eine rasche Kanalüberprüfung stattfinden.

Durch solchen Kanal-Scan werden insbesondere einer zuverlässigen Datenübertragung abträgliche Dauerstörer und Link-Budget-(Übertragungsqualitäts-) Probleme im aktuell genutzten Übertragungskanal ermittelt, aber auch etwaige weitere anstehende Probleme wie temporäre Störquellen und Kollisionssituationen aufgrund momentan zu vieler in diesem Kanal aktiver Sender bzw. versendeter/empfangener Funktelegramme.

Ob bei der Erstinstallation oder bei späterer Qualitätskontrolle, stets wird durch das statistische Verfahren (z. B. mittels der Histogramm-Darstellung) rasch eine Information über die Qualität der Empfangsgegebenheiten und damit über die Eignung des Empfängerstandortes gewonnen. Dessen Eignung kann deshalb auch von einem nicht eigens auf WLAN-Betrieb geschulten Installateur beurteilt werden, was zeit- und kostenaufwändige Fehlinstallationen stationär betriebener Datenspeicher vermeidet.

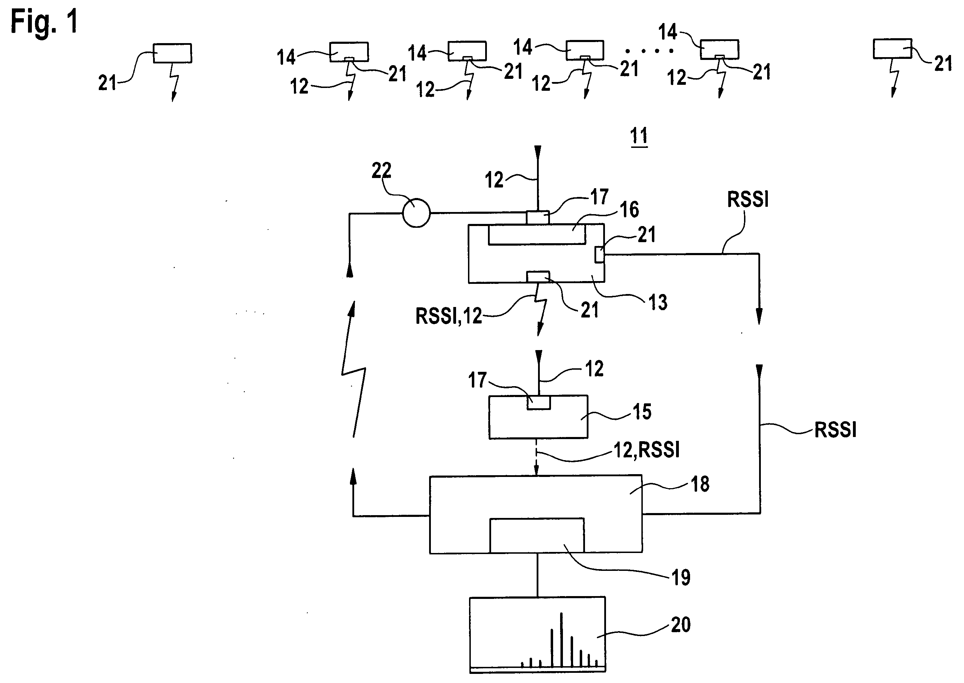

Zusätzliche Weiterbildungen und Alternativen zur erfindungsgemäßen Lösung ergeben sich aus den weiteren Ansprüchen und, auch hinsichtlich deren Vorteilen, aus nachstehender Beschreibung eines in der Zeichnung auf ein Blockschaltbild abstrahiert skizzierten bevorzugten Realisierungsbeispieles zur praktischen Anwendung der Erfindung. In der Zeichnung veranschaulicht
Fig.1 die Datenübertragung samt Möglichkeit einer Ferndiagnose hinsichtlich der aktuellen Eignung eines Betriebsstandortes für einen Datenspeicher insbesondere zum Zwischenspeichern von Verbrauchsdaten,
Fig.2 ein für den Betriebsort des Empfängers des Datenspeichers gewonnenes Histogramm der RSSI-Häufigkeitsverteilung über dem relativen Leistungspegel (dBm) für den Fall eines stark belegten Datenübertragungs-Kanals,
Fig.3 für den Fall eines gestörten Kanals und
Fig.4 für den Fall eines an dem momentanen Betriebsort des Datenspeichers freien, also geeigneten Datenübertragungs-Kanals.

Das kabellose örtliche Netzwerk des.skizzierten Datenerfassungssystemes 11 ist insbesondere zum Zwischenspeichern von abzurechnenden Verbrauchsdaten 12 (in Form von Funktelegrammen) in einem stationär betriebenen Datenspeicher 13 ausgelegt. An den werden die Verbrauchsdaten 12 von einer Mehrzahl von Verbrauchsstellen 14 per Funk über einen vorgegebenen Übertragungskanal etwa des UHF-Bandes übermittelt. Der Datenspeicher 13 seinerseits überträgt die saldierten Verbrauchsdaten 12 per Funk an einen gelegentlich hier vorüberbewegten mobilen Auswerte-Datenspeicher 15 zum Transfer an eine für die Verbrauchsabrechnung eingerichtete Zentraleinheit 18.

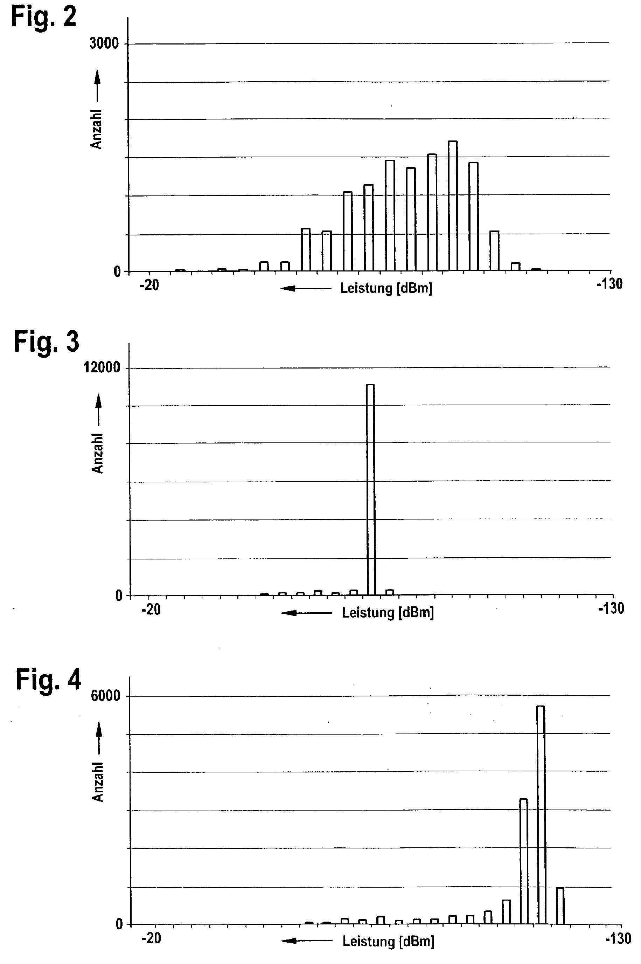

Der Datenspeicher 13 ist mit einer durchwobbelnden Abtaststeuerung 16 zum Scannen des Übertragungskanales mit einer Intervall-Schrittweite von bevorzugt im Bereich zwischen 5 ms und 1280 ms über eine variable Empfangsdauer von typisch 1s bis 16383 s ausgestattet. Über die jeweilige Dauer macht der Empfänger 17 des Datenspeichers 13 im gerade vorgegebenen Scan-Intervall RSSI-Messungen. Die werden vor Ort (etwa mittels eines Laptop, nicht gezeichnet) oder in der anderweitig betriebenen Zentraleinheit 18 statistisch leistungsbezogenen ausgewertet, insbesondere einer Histogramm-Auswerteeinrichtung 19 zugeführt. Jedenfalls bereits ab einer Empfangsdauer von ca. 60 Sekunden bei einem Abtast-Intervall von etwa 5 Millisekunden können schon praktisch alle vorkommenden digitalen Funktelegramme empfangen werden, womit die interessierende Kollisionsaussage aufgrund des daraus resultierenden RSSI-Histogrammes 20 etwa gemäß Fig.2 bis Fig.4 ermöglicht ist.

Realistische Beispiele solcher Histogramme 20 für verschiedene Kanal-Scans mit Intervallen von 5 Millisekunden über eine Scan-Dauer von 60 Sekunden (also mit 12.000 Messwerten) sind in Fig.2 bis Fig.4 wiedergegeben.

Ein momentan stark mit aktiven Sendern 21 belegter Kanal ergibt das Histogramm 20 gemäß Fig.2, das dementsprechend Kollisionsprobleme für Funktelegramme bei der Datenübertragung zum stationären Datenspeicher 13 oder zum mobilen Datenspeicher 15 erwarten lässt. Eine Behebung solcher Kollisionsprobleme (bei Beibehaltung des Standortes) ist durch eine Verringerung der Empfangsreichweite (z. B. durch Verzicht auf einen Vorverstärker im Empfänger) oder eine Einschränkung des Empfangsradius (z. B. mittels Richtantenne) möglich. Falls man auch Einfluss auf andere Sender (Funkquellen) hat, besteht noch die Möglichkeit, durch eine Reduzierung der Sendehäufgkeiten, d. h. eine Verlängerung der Intervalle zwischen den Aussendezeitpunkten der Funktelegramme, oder durch Verkürzung der Funktelegramme die Kollisionsgefahr zu senken.

Das Histogramm 20 gemäß Fig.3 verweist auf einen starken Störer im Übertragungskanal, durch dessen hohen Störpegel die Empfindlichkeit bzw. die Effizienz (Performance) des Datenspeicher-Empfängers 17 reduziert wird. Dieses Link-Budget-Problem kann durch die Wahl eines anderen Installationsortes insbesondere der Empfangsantenne (z. B. außerhalb des gerichteten Sendestrahls einer GSM-Richtäntenne) oder aber durch Installation eines geeigneten Filters (in dem Fall, dass die Sendefrequenz des Störers nicht im Übertragungskanal des Datenerfassungssystems 11 liegt) behoben werden.

In einer örtlichen Position, die ein Histogramm 20 mit einer RSSI-Verteilung gemäß Fig.4 ergibt mit relativ niedrigen Empfangsfeldstärken (was einem unschädlichen Rauschen entspricht), kann der Empfänger 17 Erfolg versprechend betrieben und deshalb dort (bzw. mit den bereits vorgenommenen Anpassungsmaßnahmen) ein stationärer Datenspeicher 13 installiert oder ein mobiler Datenspeicher 15 eingesetzt werden, ohne dass hierfür noch weitere Anpassungsmaßnahmen nötig sind, weil hier nur wenige und vor allem ganz überwiegend schwache Empfangssignale von Sendern 21 den in Betracht gezogenen Übertragungskanal belegen.

Solche Beurteilungsmöglichkeit wird vor Ort, also direkt am Datenspeicher 13 bzw. 15 etwa über einen manuell betätigbaren Schalter 22 ausgelöst und z.B. mittels eines Laptops (als Auswerteeinrichtung 19) zum Darstellen der Histogramme 20 ermöglicht. Wie im Blockschaltbild berücksichtigt, ist es insbesondere auch möglich, solchen Kanal-Scan von Zeit zu Zeit - auch im normalen Betrieb-von der Zentraleinheit 18 aus zu initiieren und dort das resultierende Histogramm 20 darzubieten, um erforderlichenfalls einen Ortswechsel für den Empfänger 17 insbesondere des stationär installierten Datenspeichers 13 zu veranlassen oder weitere Anpassungsmaßnahmen zu initiieren.

Zusätzlich zur Darstellung der statistischen Erhebung mittels eines Histogramms 20 kann die statische Auswertung der gemessenen Häufigkeiten (RSSI-Werte) auch vollautomatisch im stationären Datenspeicher 13, im mobilen Datenspeicher 15 und/oder in der Zentraleinheit 18 vorgenommen und das Ergebnis in geeigneter Weise dem Bediener (per - nicht gezeigter - Licht- oder Textanzeige) offenbart werden.

Durch das beschriebene Verfahren kann nicht nur der Standort eines stationären Datenspeichers 13, sondern auch die Empfangsqualität eines als Auslesegerät betriebenen mobilen Datenspeichers 15 beurteilt werden, um passende Anpassungsmaßnahmen zur Lösung eventuell auftretender Datenübermittlungs-Probleme zu finden.

Die Eignung eines stationären oder eines momentanen mobilen Betriebsortes für den Empfänger 17 eines Datenspeichers 13, 15 zum Aufnehmen von über einen Datenübertragungs-Kanal in einem kabellosen örtlichen Datenerfassungssystem 11 übermittelten Verbrauchsdaten 12 von Verbrauchsstellen 14 an einen Datenspeicher 13, 15 kann also erfindungsgemäß vor Ort oder im Wege einer Ferndiagnose leicht und zuverlässig dadurch qualitativ bewertet werden, dass eine Kanal-Abtastung (Scan) initiiert und vom Speicher-Empfänger 17 eine RSSI-Messung durchgeführt wird, die leistungsbezogen statistisch ausgewertet und als Histogramm 20 über die aktuelle Kanalbelegung dargestellt wird. Das macht Dauerstörer und Link-Budget-Probleme sowie temporäre Stör- und sonstige Kollisionsprobleme in diesem Kanal erkennbar und vermeidet dadurch, ohne dafür den Einsatz von funkspezifischem Fachpersonal zu benötigen, kostspielige Empfänger-Ortswechsel nach womöglich zuvor nur empirischer aber unzweckmäßiger Standortauswahl für die Empfänger-Installation.

### Bezugszeichenliste

- 11: Datenerfassungssystem v(mit 15)
- 12: Verbrauchsdaten (von 14)
- 13: stationärer Datenspeicher (für 12 von 14)
- 14: Verbrauchsstelle (liefert 12)
- 15: mobiler Datenspeicher (für 12 von 13 oder von 14)
- 16: Kanalabtast-Steuerung (zum Gewinnen von 20)
- 17: Empfänger (für 12 bei 13 oder bei 15)
- 18: Zentraleinheit (mit 19)
- 19: Auswerteeinrichtung (zum Darstellen von 20 gemäß 16)
- 20: Histogramm (von 19)
- 21: Sender (für 12 bei 13 oder 14)
- 22: Schalter (manuell oder von 18 initiiert zum Gewinnen von 20 mittels 16)

## Patentansprüche

1. Verfahren zur Standort-Beurteilung durch Testempfang für stationären oder mobilen Betrieb des Datenfunk-Empfängers (17) eines Datenspeichers (13, 15) für das Erfassen von Verbrauchsdaten (12), wobei eine qualitative Bewertung des momentanen Betriebsstandortes des Empfängers (17) aufgrund eines Kanal-Scan vorgenommen wird, zu der mit einer gewissen Frequenz-Abtast-Schrittweite über eine gewisse Zeitspanne am momentanen Betriebsstandort RSSI-Messwerte erfasst und mit Hilfe eines statistischen Verfahrens leistungsbezogen ausgewertet werden, wobei die RSSI-Messwerte als Histogramm (20) einer klassierten Häufigkeitsverteilung über die relative Empfangsfeldstärke dargestellt werden.

2. Verfahren nach dem vorangehenden Anspruch, **dadurch gekennzeichnet, dass** ein Empfänger-Standort gesucht wird, bei dem das Histogramm (20) eine RSSI-Verteilung mit ausschließlich oder zumindest überwiegend niedrigen Empfangsfeldstärken aufzeigt.

3. Verfahren nach einem der vorangehenden Ansprüche, **dadurch gekennzeichnet, dass** die Kanal-Abtastung für das statistische Verfahren über eine Dauer von einer Sekunde bis zu 16838 Sekunden erfolgt.

4. Verfahren nach dem vorangehenden Anspruch, **dadurch gekennzeichnet, dass** die Dauer in der Größenordnung von 60 Sekunden bei einem Intervall in der Größenordnung von 5 Millisekunden liegt.

5. Verfahren nach einem der vorangehenden Ansprüche, **dadurch gekennzeichnet, dass** die Kanal-Abtastung auch in Zeitschritten mit Intervallen von 5 bis 1280 Millisekunden Schrittweite erfolgt.

6. Verfahren nach einem der vorangehenden Ansprüche, **dadurch gekennzeichnet, dass** für den Fall, dass die Auswertung mittels des statistischen Verfahrens Empfangshäufigkeiten signifikant oberhalb des Grundrauschpegels ergibt, entsprechende Anpassungsmaßnahmen zur Vermeidung zu erwartender Kollisionsprobleme vorgenommen werden, vorzugsweise die Empfangsreichweite verringert wird, der Empfangsradius eingeschränkt wird und/oder die Sendehäufigkeit reduziert wird.

7. Verfahren nach einem der vorangehenden Ansprüche, **dadurch gekennzeichnet, dass** für den Fall, dass die Auswertung mittels des statistischen Verfahrens eine Empfangshäufigkeit hoher Empfangsfeldstärke ergibt, entsprechende Anpassungsmaßnahmen zur Vermeidung zu erwartender Störpegel und/oder Link-Budget-Probleme vorgenommen werden, vorzugsweise ein anderer Installationsort für die Empfangsantenne gewählt wird und/oder ein insbesondere das Störsignal stark und das Nutzsignal nur schwach dämpfender Filter installiert wird.

8. Verfahren nach einem der vorangehenden Ansprüche, **dadurch gekennzeichnet, dass** die Kanal-Abtastung an verschiedenen Empfangs-orten oder nach Vornahme entsprechender Anpassungsmaßnahmen wiederholt wird, bis erreicht ist, dass der RSSI-Leistungsverteilung im Histogramm (20) zufolge nennenswert aktive Sender nur in niedrigen Leistungsbereichen empfangen werden.

9. Verfahren nach einem der vorangehenden Ansprüche, **dadurch gekennzeichnet, dass** die Kanal-Abtastung vor Ort am Empfänger (17) eines Datenspeichers (13) ausgelöst wird oder von einer Zentraleinheit (18) zur Ferndiagnose ausgelöst wird.

## Claims

1. Method for site appraisal by means of test reception for fixed or mobile operation of the data radio receiver (17) in a data memory (13, 15) for capturing consumption data (12), wherein a qualitative assessment of the current operating site of the receiver (17) is made on the basis of a channel scan, for which qualitative assessment a certain frequency scan step size is used over a certain time period at the current operating site to capture RSSI measured values which are evaluated in relation to power using a statistical method, wherein the RSSI measured values are presented as a histogram (20) for a classified distribution of frequentness by means of the relative reception field strength.

2. Method according to the preceding claim, **characterized in that** a receiver site is sought in which the histogram (20) shows an RSSI distribution with exclusively or at least predominantly low reception field strengths.

3. Method according to one of the preceding claims, **characterized in that** the channel scan for the statistical method is effected over a period of between one second and 16838 seconds.

4. Method according to the preceding claim, **characterized in that** the period is in the order of magnitude of 60 seconds for an interval in the order of magnitude of 5 milliseconds.

5. Method according to one of the preceding claims, **characterized in that** the channel scan is effected also in time steps with intervals of between 5 and 1280 milliseconds' step size.

6. Method according to one of the preceding claims, **characterized in that** if the evaluation by means of the statistical method results in frequentness of reception significantly above the background noise level, appropriate adjustment measures to avoid expected collision problems are taken, preferably a reception range is reduced, the reception radius is restricted and/or the frequentness of transmission is reduced.

7. Method according to one of the preceding claims, **characterized in that** if the evaluation by means of the statistical method results in a frequentness of reception at high reception field strength, appropriate adjustment measures to avoid expected interference levels and/or link budget problems are taken, preferably a different installation location for the reception antenna is chosen and/or a filter which provides strong attenuation for the interference signal and only weak attenuation for the useful signal, in particular, is installed.

8. Method according to one of the preceding claims, **characterized in that** the channel scan is repeated at various reception locations or after appropriate adjustment measures have been taken until a situation is achieved in which the RSSI power distribution in the histogram (20) means that significantly active transmitters are received only in low power ranges.

9. Method according to one of the preceding claims, **characterized in that** the channel scan is initiated in situ on a receiver (17) of a data memory (13) or is initiated by a central control unit (18) for remote diagnosis.

## Revendications

1. Procédé d'estimation de l'emplacement par réception d'essai pour un fonctionnement fixe ou mobile du récepteur de radiocommunication (17) d'une mémoire de données (13, 15) pour la collecte de données d'utilisation (12), une évaluation qualitative de l'emplacement de fonctionnement momentané du récepteur (17) étant effectuée en s'appuyant sur un balayage des canaux, pour laquelle des valeurs mesurées RSSI sont collectées avec un pas de balayage en fréquence donné sur un intervalle de temps donné à l'emplacement de fonctionnement momentané et sont interprétées en rapport avec la puissance à l'aide d'un procédé statistique, les valeurs mesurées RSSI étant représentées sous la forme d'un histogramme (20) d'une distribution de la périodicité classée en fonction de l'intensité relative du champ de réception.

2. Procédé selon la revendication précédente, **caractérisé en ce qu'**un emplacement d'émetteur est recherché, au niveau duquel l'histogramme (20) présente une distribution RSSI avec des intensités du champ de réception exclusivement ou au moins majoritairement faibles.

3. Procédé selon l'une des revendications précédentes, **caractérisé en ce que** le balayage des canaux pour le procédé statistique est effectué sur une durée d'une seconde à 16 838 secondes.

4. Procédé selon l'une des revendications précédentes, **caractérisé en ce que** la durée est de l'ordre de 60 secondes avec un intervalle de l'ordre de 5 millisecondes.

5. Procédé selon l'une des revendications précédentes, **caractérisé en ce que** le balayage des canaux est également effectué dans des pas de temps avec des intervalles de pas de 5 à 1280 millisecondes.

6. Procédé selon l'une des revendications précédentes, **caractérisé en ce que** dans le cas où l'interprétation au moyen du procédé statistique produit des périodicités de réception nettement supérieures au niveau du bruit de fond, des mesures d'adaptation en conséquence sont entreprises en vue d'éviter d'éventuels problèmes de collision, de préférence en réduisant la portée de réception, en restreignant le rayon de réception et/ou en réduisant la périodicité d'émission.

7. Procédé selon l'une des revendications précédentes, **caractérisé en ce que** dans le cas où l'interprétation au moyen du procédé statistique produit une périodicité de réception à l'intensité de champ de réception élevée, des mesures d'adaptation en conséquence sont entreprises en vue d'éviter d'éventuels niveaux parasites et/ou problèmes de bilan de liaison, de préférence un autre emplacement d'installation pour l'antenne de réception est choisi et/ou un filtre qui atténue notamment fortement le signal parasite et seulement faiblement le signal utile est installé.

8. Procédé selon l'une des revendications précédentes, **caractérisé en ce que** le balayage des canaux est répété en différents emplacements de réception ou après avoir entrepris des mesures d'adaptation correspondantes jusqu'à obtenir que les émetteurs à activité nominale, d'après la distribution de puissance RSSI dans l'histogramme (20), ne soient reçus que dans les plages de puissance inférieures.

9. Procédé selon l'une des revendications précédentes, **caractérisé en ce que** le balayage des canaux est déclenché sur site au niveau du récepteur (17) d'une mémoire de données (13) ou est déclenché depuis une unité centrale (18) en vue d'un télédiagnostic.
